# EUROPEAN PATENT SPECIFICATION

(11) **EP 3 531 358 B1**
(45) Date of publication and mention of the grant of the patent: **18.12.2024**
(21) Application number: 18159017.5
(22) Date of filing: 27.02.2018
(51) Int. Cl.: H04W 4/80, G06Q 20/40, H04L 9/40, G06Q 20/32, G06Q 20/34

(54) **REDUCING FRAUDULENT DATA TRANSFERS**
REDUZIERUNG VON BETRÜGERISCHEN DATENÜBERTRAGUNGEN
RÉDUCTION DES TRANSFERTS DE DONNÉES FRAUDULEUSES

(43) Date of publication of application: 28.08.2019
(73) Proprietor: Mastercard International Incorporated, Purchase NY 10577 (US)
(72) Inventor: ALI, Muhammad Yaseen, 18 Dublin (IE)
(74) Representative: Gill Jennings & Every LLP

(56) References cited:
- EP-A1- 3 282 396
- WO-A1-2017/033118

## Description

The present disclosure relates to a method, apparatus and system for reducing fraudulent data transfers.

### BACKGROUND

Many data transfer systems, such as financial payment processors and digital communications servers, provide processes for preventing fraudulent transfers of data, such as unauthorized payments or the transfer of private information.

One such method of preventing fraudulent data transfers is for the data transfer system to require specified authorization credentials from a sender in order to verify that the sender is indeed authorized to make the transfer. In addition to the requirement of authorization credentials, the data transfer system may also make a further assessment of the risk of processing the data transfer and may reject the data transfer if it is decided that the transfer has a sufficiently high probability of the data transfer being fraudulent.

A problem in such processes is that many legitimate data transfers are incorrectly rejected due to their being considered potentially fraudulent. Conversely, fraudulent transfers may also be processed when not correctly identified as fraudulent by the processing system.

WO 2017/033118 discloses a method for enhancing security of contactless cards. The method comprises receiving, in respect of an account, a request to enable one or more contactless cards, the account being associated with the one or more contactless cards issued to a user of the account by one or more issuers; determining an operable state of the one or more contactless cards, the operable state being one of a locked state and an unlocked state; and activating a proximity mode of a mobile device associated with the one or more contactless cards when the operable state is determined as locked state, wherein the mobile device detects a proximity with the one or more contactless cards during the activated proximity mode.

EP 3 282 396 discloses a card which functions as a credit card or a cash card, the card including: a card management section configured to (i) transmit card information to a smartphone, (ii) accept from the smartphone an instruction for activating the card, and (iii) activate the card in accordance with the instruction thus accepted; and a battery which is rechargeable and is configured to supply electric power used in the card.

### SUMMARY OF INVENTION

According to an aspect of the invention, there is provided a method, performed in a mobile device, for altering security settings in relation to a data transfer, the method as defined in claim 1.

The above method allows the user to easily and instantaneously adjust security settings associated a control instrument. Security settings may be lowered for a high mode immediately before a legitimate transfer in order to prevent a false rejection of a data transfer. Security settings may set to a high level when the card is not in use to avoid unauthorized data transfers.

Preferably, the first digital message instructs the data transfer system to return to the first security mode when a predetermined period of time has elapsed after enabling the second mode.

Preferably, the method further comprises: subsequent to sending the first digital message to the server of the data transfer system: detecting, using the NFC reader of the mobile device, the presence of the control instrument in the vicinity of the mobile device, and on detecting the presence of the control instrument when a user taps the control instrument on the mobile device, providing a second digital message to the server of the data transfer system, the second digital message instructing the data transfer system to alter the security settings relating to the data transfer associated with the identifying data from the second security mode to the first security mode.

Preferably, the first security mode is a normal security mode and the second security mode is a high security mode.

Preferably, the first security mode is a high security mode and the second security mode is a normal security mode.

Preferably, prior to detecting the control instrument using the NFC reader of the mobile device, the security mode in relation to data transfers associated with the identifying data was changed from a normal security mode to a high security mode as a result of the data transfer system determining that a predetermined condition had been met.

Preferably, the predetermined condition is a data transfer determined by the data transfer system to have a high probability of being fraudulent.

Preferably, the high security mode requires that the data transfer system blocks data transfers in which the sender is identified by the secure identifying data. Preferably, the high security mode requires that the data transfer system blocks data transfers that were not initiated using the control instrument.

Preferably, the normal security mode requires that the data transfer was initiated using the control instrument or using the secure identifying data.

Preferably, the control instrument is a control card.

According to another aspect of the invention, there is also provided a mobile device as defined in claim 10.

In yet another aspect, a system is provided, the system comprising: the mobile device of the second aspect being configured to perform the steps of the method defined above; a server of the data transfer system; and the control instrument. Preferably, the control instrument is a payment instrument.

### BRIEF DESCRIPTION OF THE FIGURES

Aspects of the present invention will now be described by way of example with reference to the accompanying figures. In the figures:
Figure 1 shows a system for performing data transfers in accordance with examples of the disclosure.
Figure 2 is a flow diagram showing steps performed in an example of the disclosure.

### DETAILED DESCRIPTION OF EMBODIMENTS OF THE INVENTION

The following description is presented to enable any person skilled in the art to make and use the system, and is provided in the context of a particular application. Various modifications to the disclosed embodiments will be readily apparent to those skilled in the art.

The present invention relates to a method, apparatus and system that allows a user to alter the security level applied to data transfers using their credentials. In particular, a user taps a control instrument onto a mobile device in order to activate and deactivate security features when needed by the user.

The embodiments described in detail below are provided in relation to the processing of payments. Accordingly, in the below examples, the control instrument used during the data transfers is a payment instrument, such as a debit card or credit card. However, it will be understood by the skilled person that the method described herein may be used in relation to other data transfer systems, and that in such systems the control instrument may be another suitable instrument for controlling security settings relating to a data transfer and/or initiating a data transfer.

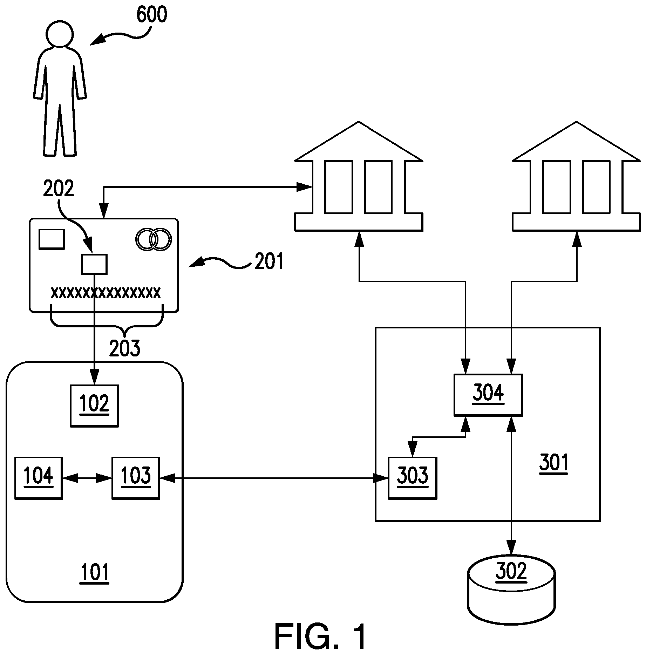

Figure 1 shows elements in a system for use in the present invention. The system comprises a payment processor server 301 that is configured to process digital messages received from servers financial institutions 400; 500.

When a user 600 intends to make a payment to an account at an acquiring financial institution 500, a server at an issuing financial institution 400 generates an authorization request message (in accordance with a financial messaging standard such as ISO 8583), which is sent to the payment processor server 301 to be forwarded on to the acquiring institution 500. The authorization request message comprises data indicating payment credentials 203 of the user, where the payment credentials 203 are associated with a payment instrument such as a debit or credit card 201. The authorization request message further comprises various other data elements indicating further details of the transaction, such as the amount of the transaction and the recipient of the transaction.

Before forwarding the authorization request message to the acquiring institution 500, the payment processing server 301 performs checks to determine whether the authorization may be fraudulent. The checks may include verifying that the information in the data provided in the authorization request message matches records kept by the payment processor, such as an address of a user or a card security code.

The particular checks performed by the payment processing server 301 before deciding whether to process an authorization request message depend on the particular payment credentials used in the transaction. The payment processing server 301 has access to a security control database 302 that indicates the particular checks to be applied to a given transaction. When the payment processing server 301 receives an authorization request message, the payment processing server 301 may access the security control database 302 to first determine which checks are appropriate for the transaction before performing the checks. The security control database 302 may, for example, comprise a number of data entries, each of which defines the appropriate checks to perform on transactions originating from a given user. The particular user may be identified in the security control database 302 by elements of their payment credentials, such as their primary account number (PAN).

The security control database 302 defines at least two security modes for each user. In a normal security mode, the payment processing server performs checks that are normally performed during a payment data transfer, such as address and card security number verification processes. In a high security mode, the payment processing server may perform stricter security checks, such as blockings transactions where transaction was initiated without the user's being in the vicinity of the merchant (cardholder not present transactions), or may block transactions from the user entirely. The normal security mode can be considered as a card "awake" mode, as the card may be used normally. Where transactions are blocked entirely, the high security mode can be considered as a card "sleep" mode, as the card is effectively disabled. A high security mode in which only certain classes of transfer (such as card not present transfers) are blocked can be considered as a "partial sleep" mode, as the card is disabled for certain classes of transfers but may be used for other transfers.

The security control database 302 may be updated in order to vary the specifications of the security checks that are applied to transactions originating from a given user. The payment processing sever 301 itself may specify certain aspects of the security checks, while the user may specify other aspects of the security checks himself. For example, the user may specify that in the high security mode a) no transactions are permitted, or b) that no card not present transactions are permitted.

In order to update the security control database 302, the user may interact with the payment processing server 301 via a dedicated application. A server side application 304 communicates with a client side application 104 installed on a computing device of the user. The computing device may be a mobile device 101 of the user or a desktop computer or another such device.

The user 600 may register its payment credentials using the application. The application retrieves different device related and also card related details from the device in use. The data is saved at the security control database 302 and may be used to identify the user and the user's devices 101. The user can use the application 104 to configure the security settings stored in the security control database 302. For example, the user may configure his security settings such that the high security setting prevents for all card not present transactions and ATMs, while only normal security checks are used in transactions that take place at a merchant premise. Additional security controls may be also applied to the normal security mode, though the remainder of the detailed description will assume that the normal security mode applies only standard security controls to transactions.

A mobile device 101 of the user has the above described application 104 stored in its memory. The mobile device 101 may be the same computing device used to set the security controls associated with the user in the security control database 302. Alternatively, it may be separate device having the application 104 stored thereon and having logged in with the same log in credentials.

The mobile device 101 comprises a near field communication (NFC) reader 102 and a communication node 103 configured to communicate (directly or indirectly) with a communication node 303 of the payment processing server 301. The NFC reader is suitable for detecting the presence of a payment instrument 201 (such as a debit or credit card) associated with a payment account of the user 600 at an issuing financial institution 400. The payment instrument comprises a NFC readable identification tag 201 that comprises identifying data the payment instrument 201. The identifying data may, for example, comprise the PAN of a credit or debit card.

The mobile device 101 is configured such that upon identifying the presence of the payment instrument having payment credentials registered to the application 104, the mobile device sends a message to the payment processing server 301 (either directly or indirectly from communication node 103 to communication node 203) instructing the payment processing server 301 to switch from using (with respect to payments initiated using payment credentials of the user) either the high security controls to the normal security controls or from the normal security controls to the high security controls. Thus, by tapping the payment instrument 201 on the mobile device 101, the user 600 is able to change the security controls on payments using payment credentials 203 of the payment instrument 201. This allows the user 600 to effectively "wake" or put to "sleep" the payment credentials 203 associated with the payment instrument 201. Rather than a simple tap, other activation requirements may be chosen, such as a "tap and hold", which requires that the payment card 201 is detected by the NFC reader of the mobile device 101 for a minimum time period, for example 500ms.

The user 600 may use the application 104 to specify the effect of tapping the card on the phone with respect to the security settings. The following examples provide examples of possible configurations of security settings and tap functionality that could be specified by a user. The skilled person will understand that features from the different examples can be combined or modified as desired within the scope of the present disclosure.

### Example 1

The user 600 decides to configure the security settings relating to a payment card 201 in the security control database 302 such that the default security setting is a high security settings that rejects all transactions associated with the payment credentials 203. The payment card 201 is, therefore, in a "sleep" mode. The security settings are further configured such that tapping the payment card 201 to the mobile device 101 causes the mobile device 101 to send a message to the payment processing server 301 resulting in the security mode changing to a normal security mode. The user 600 has further specified that the security mode remains in the normal security mode for fifteen minutes time before the security setting automatically returns to the high security mode. Thus, the payment card is "woken" for a fifteen minute time period by tapping the payment card on the mobile device 101. The security settings may be further configured such that the payment card automatically "sleeps" (i.e. returns to the high security mode) after a payment has been made using the payment credentials 203.

An illustration of a use of this example is as follows. The user 600 goes to a merchant store to obtain goods. At the time of payment, the user 600 taps the payment card 201 to his mobile device 101. The mobile device 101 detects the presence of the NFC tag 202 of the payment card 201 and sends a message to the payment processing server 301 to change security settings for the payment credentials 203 from a high setting to a normal setting for fifteen minutes. The payment card 201 "wakes up" for fifteen minute, in which time the user 600 pays for goods from the merchant using an authorization request message which is processed by the payment processing server 301 according to the normal security controls. After the purchase, the payment card 201 automatically goes back to sleep after fifteen minutes when the payment processing server 301 changes the security settings from the normal security mode to the high security mode.

If the user 600 subsequently loses the payment card 201, or if a malicious party steals and uses the payment credentials 203, the payment card 203 cannot be used to make payments as the payment card 203 will be in a "sleep" mode.

### Example 2

The user specifies that in the high security mode, the card "partially sleeps", such that card not present transactions are blocked, whereas cardholder present transactions are allowed. The user 600 further specifies that a first tap of payment card 201 on the mobile device causes the security settings to change from the high security mode to a normal security mode. A second tap of the payment card 201 on the mobile device 101 causes the security settings to change from the normal security mode to the high security mode. There may or may not be a predetermined time limit after which the security settings return from the normal security mode to the high security mode.

The user 600 is able to purchase goods in shops and use ATMs in the high security mode. When the user 600 wishes to make a card not present payment, such as a payment transaction in which the payment credentials 203 associated with the payment card 201 are provided over the telephone, the user 600 taps the payment card 201 on the mobile device 101. The mobile device 101 then sends a message to payment processing server 301 causing the security settings to change to the normal security mode. The user 600 then makes a telephone payment while the card is in the normal security mode and, subsequently, taps the payment card 201 to the mobile device 101 again to restore the high security mode.

### Example 3

The user specifies that the mobile device 101 is in a normal security mode by default. The security settings are configured such that the security mode is automatically changed by the payment processing server 301 to a high security mode on detection of an event fulfilling a predetermined alert condition indicating that activity may be fraudulent. The predetermined alert condition may be, for example, authorization requests for amounts of more than $500USD made in quick succession in a certain shop in a certain country. The high security mode blocks all transactions made using the payment credentials 203. Thus, the card may automatically enter a "sleep" mode when a fraudulent payment is suspected.

The security settings specify that tapping the payment card 201 to the mobile device 101 causes the payment credentials 203 to be returned to the normal security level.

This process allows false declines of cards to be avoided when fraud is incorrectly suspected by the payment processing server 301. Instead of declining the payment card 201, the payment card 201 is put into "sleep" mode when a fraud is suspected. The user may discover that the payment card is in a "sleep" mode at a subsequent use (at an ATM, for example) without having been explicitly requested to enter said mode. The user may determine that the sleeping of the card is an anti-fraud measure that user specified in the security settings. The user may then hold the payment card 201 to the NFC enabled mobile device 101 to reactivate the card.

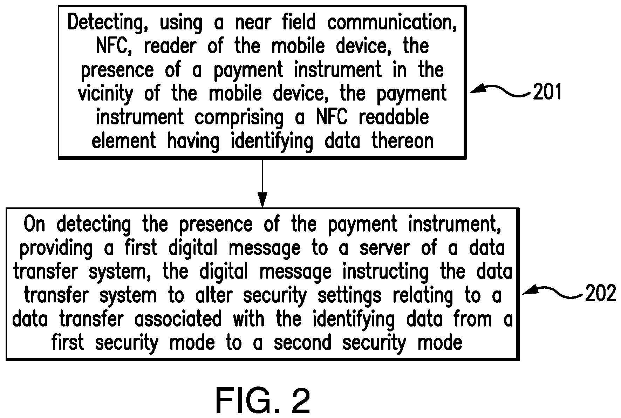

Figure 2 shows a flow diagram illustrating the steps performed by a mobile device 101 in example of this invention.

In step 201, the mobile device 101 detects, using an NFC, the presence of the payment instrument in the vicinity of the mobile device 101. The payment instrument 201 comprises a NFC readable element 202 having identifying data thereon. Step 201 occurs when a user taps a payment instrument (such as a payment card 201) registered with the security control application 104;304 against a mobile device 101 having an NFC reader and the security control application 104 stored thereon. The identifying data may indicate payment credentials 203 associated with the payment card 203.

In step 203, the mobile device 101, on detecting the presence of the payment instrument 201, provides a first digital message to a server of a data transfer system. The digital message instructs the data transfer system to alter security settings relating to a data transfer associated with the identifying data from a first security mode to a second security mode.

The first security mode may be a high security mode and the second security mode may be a normal security mode. Alternatively, the first security mode may be a normal security mode and the second security mode may be a high security mode. Thus, by tapping the payment instrument 201 on the mobile device 101, a user may either cause the payment instrument 201 to "wake" or to "sleep" depending on the chosen security settings as configured by the user 600.

Other embodiments will be apparent to those skilled in the art from consideration of the specification and practice of the embodiments disclosed herein. It is intended that the specification and examples be considered as exemplary only.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, contemporaneously with, or after another operation is in accordance with the described embodiments.

The methods described herein may be encoded as executable instructions embodied in a computer readable medium, including, without limitation, non-transitory computer-readable storage, a storage device, and/or a memory device. Such instructions, when executed by a processor (or one or more computers, processors, and/or other devices) cause the processor (the one or more computers, processors, and/or other devices) to perform at least a portion of the methods described herein. A non-transitory computer-readable storage medium includes, but is not limited to, volatile memory, non-volatile memory, magnetic and optical storage devices such as disk drives, magnetic tape, CDs (compact discs), DVDs (digital versatile discs), or other media that are capable of storing code and/or data.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Receivers and transmitters as described herein may be standalone or may be comprised in transceivers. User input devices can include, without limitation, microphones, buttons, keypads, touchscreens, touchpads, trackballs, joysticks and mice. User output devices can include, without limitation, speakers, graphical user interfaces, indicator lights and refreshable braille displays. User interface devices can comprise one or more user input devices, one or more user output devices, or both.

## Claims

1. A method, performed in a mobile device (101), for altering security settings in relation to a data transfer, the method comprising:
detecting, using a near field communication, NFC, reader (102) of the mobile device, the presence of a control instrument (201) in the vicinity of the mobile device when a user (600) taps the control instrument on the mobile device, the control instrument comprising a NFC readable element (202) having identifying data thereon, and
on detecting the presence of the control instrument, providing by the mobile device, a first digital message to a server of a data transfer system (301), the digital message instructing the data transfer system to alter security settings relating to a payment data transfer of the control instrument associated with the identifying data from a first security mode to a second security mode, wherein the first digital message instructs the data transfer system to return to the first security mode when a predetermined period of time has elapsed after enabling the second mode, wherein the first security mode indicates the data transfer system to block certain classes of transfers or any payment data transfer, and wherein the second security mode indicates the data transfer system to perform normal security checks on the payment data transfer.

2. The method of claim 1, further comprising:
subsequent to sending the first digital message to the server of the data transfer system (301):
detecting, using the NFC reader (102) of the mobile device (101), the presence of the control instrument (201) in the vicinity of the mobile device, and on detecting the presence of the control instrument when a user taps the control instrument on the mobile device, providing a second digital message to the server of the data transfer system, the second digital message instructing the data transfer system to alter the security settings relating to the data transfer associated with the identifying data from the second security mode to the first security mode.

3. The method of any of claims 1 to 2, wherein the first security mode is a high security mode and the second security mode is a normal security mode.

4. The method of claim 3, wherein prior to detecting the control instrument (201) using the NFC reader (102) of the mobile device (101), the security mode in relation to data transfers associated with the identifying data was changed from a normal security mode to a high security mode as a result of the data transfer system determining that a predetermined condition had been met.

5. The method of claim 4, wherein the predetermined condition is a data transfer determined by the data transfer system (301) to have a high probability of being fraudulent.

6. The method of claim 4, wherein the high security mode requires that the data transfer system (301) blocks data transfers in which the sender is identified by the identifying data

7. The method of claim 3 wherein the high security mode requires that the data transfer system (301) blocks data transfers that were not initiated using the control instrument (202).

8. The method of any of claims 3 to 5, wherein the normal security mode requires that the data transfer was initiated using the control instrument (201) or using the identifying data.

9. The method of any preceding claim, wherein the control instrument (201) is a control card.

10. A mobile device (101) comprising a near field communication, NFC, reader (102) and a communication node (103), the mobile device configured to perform the step of:
detecting, using the NFC reader of the mobile device, the presence of a control instrument (201) in the vicinity of the mobile device when a user (600) taps the control instrument on the mobile device, the control instrument comprising a NFC readable element (202) having identifying data thereon, and
on detecting the presence of the control instrument, providing, using the communication node of the mobile device, a first digital message to a server of a data transfer system (301), the digital message instructing the data transfer system to alter security settings relating to a payment data transfer of the control instrument associated with the identifying data from a first security mode to a second security mode, wherein the first digital message instructs the data transfer system to return to the first security mode when a predetermined period of time has elapsed after enabling the second mode, wherein the first security mode indicates the data transfer system to block certain classes of transfers or any payment data transfer, and wherein the second security mode indicates the data transfer system to perform normal security checks on the payment data transfer.

11. A system comprising:
the mobile device (101) of claim 10 being configured to perform the steps of the methods of any of claims 1 to 9;
the server of the data transfer system (301); and the control instrument (201).

## Patentansprüche

1. Verfahren, das in einer mobilen Vorrichtung (101) durchgeführt wird, zum Ändern von Sicherheitseinstellungen in Bezug auf eine Datenübertragung, wobei das Verfahren Folgendes umfasst:
Erfassen, unter Verwendung einer Lesevorrichtung (102) für die Nahfeldkommunikation (Near Field Communication, NFC) der mobilen Vorrichtung, des Vorhandenseins eines Steuerinstruments (201) in der Nähe der mobilen Vorrichtung, wenn ein Benutzer (600) mit dem Steuerinstrument auf die mobile Vorrichtung tippt, wobei das Steuerinstrument ein NFC-lesbares Element (202) umfasst, das darauf Identifizierungsdaten aufweist, und
bei Erfassen des Vorhandenseins des Steuerinstruments, Bereitstellen, durch die mobile Vorrichtung, einer ersten digitalen Nachricht an einen Server eines Datenübertragungssystems (301), wobei die digitale Nachricht das Datenübertragungssystem anweist, Sicherheitseinstellungen in Bezug auf eine Zahlungsdatenübertragung des Steuerinstruments, die den Identifizierungsdaten zugeordnet ist, von einem ersten Sicherheitsmodus in einen zweiten Sicherheitsmodus zu ändern, wobei die erste digitale Nachricht das Datenübertragungssystem anweist, in den ersten Sicherheitsmodus zurückzukehren, wenn nach dem Aktivieren des zweiten Modus eine vorgegebene Zeitspanne verstrichen ist, wobei der erste Sicherheitsmodus das Datenübertragungssystem anweist, bestimmte Klassen von Übertragungen oder jegliche Zahlungsdatenübertragung zu blockieren, und wobei der zweite Sicherheitsmodus das Datenübertragungssystem anweist, normale Sicherheitsprüfungen bei der Zahlungsdatenübertragung durchzuführen.

2. Verfahren nach Anspruch 1, das ferner Folgendes umfasst:
nach dem Senden der ersten digitalen Nachricht an den Server des Datenübertragungssystems (301):
Erfassen, unter Verwendung der NFC-Lesevorrichtung (102) der mobile Vorrichtung (101), des Vorhandenseins der Steuervorrichtung (201) in der Nähe der mobilen Vorrichtung, und bei Erfassen des Vorhandenseins der Steuervorrichtung, wenn ein Benutzer die Steuervorrichtung auf der mobilen Vorrichtung antippt, Bereitstellen einer zweiten digitalen Nachricht an den Server des Datenübertragungssystems, wobei die zweite digitale Nachricht das Datenübertragungssystem anweist, die Sicherheitseinstellungen in Bezug auf die Datenübertragung, die den Identifizierungsdaten zugeordnet ist, vom zweiten Sicherheitsmodus zum ersten Sicherheitsmodus zu ändern.

3. Verfahren nach einem der Ansprüche 1 bis 2, wobei der erste Sicherheitsmodus ein Hochsicherheitsmodus und der zweite Sicherheitsmodus ein normaler Sicherheitsmodus ist.

4. Verfahren nach Anspruch 3, wobei vor dem Erfassen des Steuerinstruments (201) unter Verwendung der NFC-Lesevorrichtung (102) der mobilen Vorrichtung (101) der Sicherheitsmodus in Bezug auf Datentransfers, die den Identifizierungsdaten zugeordnet sind, von einem normalen Sicherheitsmodus zu einem hohen Sicherheitsmodus geändert wurde, als Ergebnis des Datentransfersystems, das bestimmt, dass eine vorbestimmte Bedingung erfüllt wurde.

5. Verfahren nach Anspruch 4, wobei die vorbestimmte Bedingung eine Datenübertragung ist, die durch das Datenübertragungssystem (301) als mit hoher Wahrscheinlichkeit betrügerisch bestimmt wird.

6. Verfahren nach Anspruch 3, wobei der Hochsicherheitsmodus erfordert, dass das Datenübertragungssystem (301) Datenübertragungen blockiert, bei denen der Absender durch die Identifizierungsdaten identifiziert wird.

7. Verfahren nach Anspruch 3, wobei der Hochsicherheitsmodus erfordert, dass das Datenübertragungssystem (301) Datenübertragungen blockiert, die nicht unter Verwendung des Kontrollinstruments (202) initiiert wurden.

8. Verfahren nach einem der Ansprüche 3 bis 5, wobei der normale Sicherheitsmodus erfordert, dass die Datenübertragung unter Verwendung des Kontrollinstruments (201) oder unter Verwendung der Identifizierungsdaten initiiert wurde.

9. Verfahren nach einem der vorhergehenden Ansprüche, wobei das Kontrollinstrument (201) eine Kontrollkarte ist.

10. Mobile Vorrichtung (101), die eine Nahfeldkommunikations- (NFC-) Lesevorrichtung (102) und einen Kommunikationsknoten (103) umfasst, wobei die mobile Vorrichtung so konfiguriert ist, dass sie den folgenden Schritt durchführt:
Erfassen, unter Verwendung der NFC-Lesevorrichtung der mobilen Vorrichtung, des Vorhandenseins eines Steuerinstruments (201) in der Nähe der mobilen Vorrichtung, wenn ein Benutzer (600) mit dem Steuerinstrument auf die mobile Vorrichtung tippt, wobei das Steuerinstrument ein NFC-lesbares Element (202) umfasst, das darauf Identifizierungsdaten aufweist, und
bei Erfassen des Vorhandenseins des Steuerinstruments, Bereitstellen, unter Verwendung des Kommunikationsknotens der mobilen Vorrichtung, einer ersten digitalen Nachricht an einen Server eines Datenübertragungssystems (301), wobei die digitale Nachricht das Datenübertragungssystem anweist, Sicherheitseinstellungen in Bezug auf eine Zahlungsdatenübertragung des Steuerinstruments, die den Identifizierungsdaten zugeordnet ist, von einem ersten Sicherheitsmodus in einen zweiten Sicherheitsmodus zu ändern, wobei die erste digitale Nachricht das Datenübertragungssystem anweist, in den ersten Sicherheitsmodus zurückzukehren, wenn nach dem Aktivieren des zweiten Modus eine vorgegebene Zeitspanne verstrichen ist, wobei der erste Sicherheitsmodus das Datenübertragungssystem anweist, bestimmte Klassen von Übertragungen oder jegliche Zahlungsdatenübertragung zu blockieren, und wobei der zweite Sicherheitsmodus das Datenübertragungssystem anweist, normale Sicherheitsprüfungen bei der Zahlungsdatenübertragung durchzuführen.

11. System, das Folgendes umfasst:
die mobile Vorrichtung (101) nach Anspruch 10, die so konfiguriert ist, dass sie die Schritte der Verfahren nach einem der Ansprüche 1 bis 9 durchführt;
den Server des Datenübertragungssystems (301); und das Steuerinstrument (201).

## Revendications

1. Procédé, effectué sur un dispositif mobile (101), servant à modifier des paramètres de sécurité se rapportant à un transfert de données, le procédé comportant les étapes consistant à :
détecter, en utilisant un lecteur NFC (near field communication - communication en champ proche) (102) du dispositif mobile, la présence d'un instrument de commande (201) à proximité du dispositif mobile quand un utilisateur (600) tape sur l'instrument de commande du dispositif mobile, l'instrument de commande comportant un élément lisible par NFC (202) sur lequel se trouvent des données d'identification, et
lors de la détection de la présence de l'instrument de commande, fournir par le dispositif mobile un premier message numérique à un serveur d'un système de transfert de données (301), le message numérique ordonnant au système de transfert de données de modifier les paramètres de sécurité se rapportant à un transfert de données de paiement de l'instrument de commande associé aux données d'identification d'un premier mode de sécurité à un deuxième mode de sécurité, dans lequel le premier message numérique ordonne au système de transfert de données de revenir au premier mode de sécurité quand une période de temps prédéterminée s'est écoulée après l'activation du deuxième mode, dans lequel le premier mode de sécurité indique au système de transfert de données de bloquer certaines classes de transferts ou tout transfert de données de paiement, et dans lequel le deuxième mode de sécurité indique au système de transfert de données d'effectuer des contrôles de sécurité de niveau normal sur le transfert de données de paiement.

2. Procédé selon la revendication 1, comportant par ailleurs les étapes consistant à :
après l'envoi du premier message numérique au serveur du système de transfert de données (301) :
détecter, en utilisant le lecteur NFC (102) du dispositif mobile (101), la présence de l'instrument de commande (201) à proximité du dispositif mobile, et lors de la détection de la présence de l'instrument de commande quand un utilisateur tape sur l'instrument de commande sur le dispositif mobile, fournir un deuxième message numérique au serveur du système de transfert de données, le deuxième message numérique ordonnant au système de transfert de données de modifier les paramètres de sécurité se rapportant au transfert de données associé aux données d'identification du deuxième mode de sécurité au premier mode de sécurité.

3. Procédé selon l'une quelconque des revendications 1 à 2, dans lequel le premier mode de sécurité est un mode de sécurité de niveau élevé et le deuxième mode de sécurité est un mode de sécurité de niveau normal.

4. Procédé selon la revendication 3, dans lequel, avant la détection de l'instrument de commande (201) en utilisant le lecteur NFC (102) du dispositif mobile (101), le mode de sécurité se rapportant aux transferts de données associés aux données d'identification a été changé d'un mode de sécurité de niveau normal à un mode de sécurité de niveau élevé en raison du fait que le système de transfert de données a déterminé qu'une condition prédéterminée avait été satisfaite.

5. Procédé selon la revendication 4, dans lequel la condition prédéterminée est un transfert de données déterminé par le système de transfert de données (301) comme ayant une probabilité élevée d'être frauduleux.

6. Procédé selon la revendication 3, dans lequel le mode de sécurité de niveau élevé exige que le système de transfert de données (301) bloque les transferts de données dans lesquels l'expéditeur est identifié par les données d'identification.

7. Procédé selon la revendication 3, dans lequel le mode de sécurité de niveau élevé exige que le système de transfert de données (301) bloque les transferts de données qui n'ont pas été déclenchés en utilisant l'instrument de commande (202) .

8. Procédé selon l'une quelconque des revendications 3 à 5, dans lequel le mode de sécurité de niveau normal exige que le transfert de données ait été déclenché en utilisant l'instrument de commande (201) ou en utilisant les données d'identification.

9. Procédé selon l'une quelconque des revendications précédentes, dans lequel l'instrument de commande (201) est une carte de commande.

10. Dispositif mobile (101) comportant un lecteur NFC (near field communication - communication en champ proche) (102) et un nœud de communication (103), le dispositif mobile étant configuré pour effectuer les étapes consistant à :
détecter, en utilisant le lecteur NFC du dispositif mobile, la présence d'un instrument de commande (201) à proximité du dispositif mobile quand un utilisateur (600) tape sur l'instrument de commande sur le dispositif mobile, l'instrument de commande comportant un élément lisible par NFC (202) sur lequel se trouvent des données d'identification, et
lors de la détection de la présence de l'instrument de commande, fournir, en utilisant le nœud de communication du dispositif mobile, un premier message numérique à un serveur d'un système de transfert de données (301), le message numérique ordonnant au système de transfert de données de modifier les paramètres de sécurité se rapportant à un transfert de données de paiement de l'instrument de commande associé aux données d'identification d'un premier mode de sécurité à un deuxième mode de sécurité, dans lequel le premier message numérique ordonne au système de transfert de données de revenir au premier mode de sécurité quand une période de temps prédéterminée s'est écoulée après l'activation du deuxième mode, dans lequel le premier mode de sécurité indique au système de transfert de données de bloquer certaines classes de transferts ou tout transfert de données de paiement, et dans lequel le deuxième mode de sécurité indique au système de transfert de données d'effectuer des contrôles de sécurité de niveau normal sur le transfert de données de paiement.

11. Système comportant :
le dispositif mobile (101) selon la revendication 10, configuré pour exécuter les étapes des procédés selon l'une quelconque des revendications 1 à 9 ;
le serveur du système de transfert de données (301) ; et
l'instrument de commande (201).
